(19) Europäisches Patentamt
European Patent Office
Office européen des brevets

(11) **EP 3 465 164 B1**

(12) **EUROPÄISCHE PATENTSCHRIFT**

(45) Veröffentlichungstag und Bekanntmachung des Hinweises auf die Patenterteilung:
**20.05.2020 Patentblatt 2020/21**

(21) Anmeldenummer: **17730943.2**

(22) Anmeldetag: **01.06.2017**

(51) Int Cl.:
*G01N 21/65* (2006.01)   *G01J 3/28* (2006.01)
*G01J 3/44* (2006.01)   *G01N 21/27* (2006.01)

(86) Internationale Anmeldenummer:
**PCT/IB2017/053228**

(87) Internationale Veröffentlichungsnummer:
**WO 2017/208184 (07.12.2017 Gazette 2017/49)**

(54) **VERFAHREN ZUR REKONSTRUKTION EINES RAMAN-SPEKTRUMS**

METHOD FOR THE RECONSTRUCTION OF A RAMAN SPECTRUM

PROCÉDÉ DE RECONSTRUCTION D'UN SPECTRE DE RAMAN

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **03.06.2016 DE 102016110341**

(43) Veröffentlichungstag der Anmeldung:
**10.04.2019 Patentblatt 2019/15**

(73) Patentinhaber:
• **Leibniz-Institut für Photonische Technologien e.V.**
**07745 Jena (DE)**
• **Friedrich-Schiller-Universität Jena**
**07743 Jena (DE)**

(72) Erfinder:
• **CHERNAVSKAIA, Olga**
**80992 München (DE)**
• **BOCKLITZ, Thomas**
**07743 Jena (DE)**
• **POPP, Jürgen**
**07751 Kunitz-Jena (DE)**

(74) Vertreter: **Maiwald Patent- und Rechtsanwaltsgesellschaft mbH**
**Elisenhof**
**Elisenstraße 3**
**80335 München (DE)**

(56) Entgegenhaltungen:
**US-A1- 2006 192 969    US-B1- 8 570 507**

• **OSTICIOLI I ET AL: "Fluorescence and Raman spectra on painting materials: reconstruction of spectra with mathematical methods", JOURNAL OF RAMAN SPECTROSCOPY, Bd. 37, Nr. 10, 2006, Seiten 974-980, XP055397175, GB ISSN: 0377-0486, DOI: 10.1002/jrs.1587**
• **MATOUSEK P ET AL: "Simple reconstruction algorithm for shifted excitation Raman difference spectroscopy", APPLIED SPECTROSC, THE SOCIETY FOR APPLIED SPECTROSCOPY. BALTIMORE, US, Bd. 59, Nr. 6, 2005, Seiten 848-851, XP007916535, ISSN: 0003-7028 in der Anmeldung erwähnt**
• **OSTICIOLI I ET AL: "Shift-Excitation Raman Difference Spectroscopy-Difference Deconvolution Method for the Luminescence Background Rejection from Raman Spectra of Solid Samples", APPLIED SPECTROSCOPY., Bd. 61, Nr. 8, 2007, Seiten 839-844, XP055397189, US ISSN: 0003-7028, DOI: 10.1366/000370207781540169**
• **RAMOS P M ET AL: "Noise and background removal in Raman spectra of ancient pigments using wavelet transform", JOURNAL OF RAMAN SPECTROSCOPY, Bd. 36, Nr. 9, 2005, Seiten 848-856, XP055397153, GB ISSN: 0377-0486, DOI: 10.1002/jrs.1370**

## Beschreibung

Die Erfindung betrifft ein Verfahren zur Rekonstruktion eines Raman-Spektrums aus Spektren, die eine Probe auf eine optische Anregung mit verschiedenen Anregungsspektren hin generiert.

Stand der Technik

Bei der Raman-Spektroskopie werden die Schwingungszustände einer Probe optisch abgefragt, was in sich in energetisch verschobenen spektralen Anteilen manifestiert. Dadurch wird das Antwortspektrum des von der Probe inelastisch gestreuten Lichts verändert. Da die die Schwingungszustände molekülspezifisch sind, kann auf diese Weise die genaue chemische Zusammensetzung der Probe analysiert werden.

Der Raman-Effekt ist quantitativ ein kleiner Effekt. Insbesondere bei der Untersuchung an biologischen Proben ist das inelastisch gestreute Licht von wesentlich intensiverem Fluoreszenzlicht überlagert. Um aus dieser Überlagerung das Raman-Spektrum zu extrahieren, werden heute unter anderem die allgemein bekannten Methoden SERDS und MRS verwendet.

Bei der SERDS-Methode (shifted excitation Raman difference spectroscopy) wird die Probe nacheinander mit zwei Anregungsspektren angeregt, die zueinander wellenlängenverschoben sind. Da weder das Fluoreszenzlicht noch das sonstige Störlicht von den im Anregungsspektrum enthaltenen Wellenlängen abhängt, sind diese unerwünschten Anteile in den jeweils erhaltenen Antwortspektren gleich. Indem beide Antwortspektren voneinander subtrahiert werden, werden beide unerwünschten Anteile eliminiert, und es entsteht ein resultierendes Spektrum, das der Ableitung des gesuchten Raman-Spektrums entspricht. Die SERDS-Methode ist beispielsweise in (P. Matousek, M. Towrie, A. W. Parker, "Simple Reconstruction Algorithm for Shifted Excitation Raman Difference Spectroscopy", Applied Spectroscopy 59 (6), 848-851 (2005)) umrissen.

Nachteilig ist, dass diese Methode darauf angewiesen ist, dass die Wellenlängenverschiebung infinitesimal klein ist, so dass die Differenz der beiden Antwortspektren mathematisch zur Ableitung des gesuchten Raman-Spektrums äquivalent ist. Insbesondere muss die Verschiebung kleiner sein als die spektrale Breite eines Raman-Peaks. Die zu verwendende Verschiebung wird dadurch probenabhängig.

Bei der MRS-Methode (modulated Raman spectroscopy) wird die Anregungswellenlänge periodisch moduliert. Das Raman-Spektrum wird aus dem sich periodisch ändernden Antwortspektrum mittels Hauptkomponentenanalyse extrahiert unter der Annahme, dass die erste Hauptkomponente der größten Varianz und somit den sich ändernden Raman-Informationen entspricht. Einen Überblick über die MRS-Methode und Anwendungen geben (A. C. De Luca, K. Dholakia, M. Mazilu, "Modulated Raman Spectroscopy for Enhanced Cancer Diagnosis at the Cellular Level", Sensors 15, 13680-13704 (2015)), (S. Dochow, B. Bergner, C. Krafft, J. Clement, M. Mazilu, B. B. Praveen, P. C. Ashok, R. Marchington, K. Dholakia, J. Popp, "Classification of Raman spectra of single cells with autofluorescence suppression by wavelength modulated excitation", Analytical Methods 5, 4608-4614 (2013)) sowie (A. C. De Luca, M. Mazilu, A. Riches, C. S. Herrington, K. Dholakia, "Online Fluorescence Suppression in Modulated Raman Spectroscopy", Analytical Chemistry 82, 738-745 (2010)).

Nachteilig ist auch hier, dass die der MRS-Methode zu Grunde liegende Annahme lediglich einer linearisierenden Näherung entspricht.

(Osticioli et al.: "Fluorescence and Raman spectra on painting materials: reconstruction of spectra with mathematical methods", Journal of Raman Spectroscopy 37, 10 (2006), 974-980, ISSN 0377-0486, doi: 10.1002/jts.1587) und (Osticioli et al.: "Shift-Excitation Raman Difference Spectroscopy-Difference Deconvolution Method for the Luminescence Background Rejection from Raman Spectra of Solid Samples", Applied Spectroscopy 61, 8 (2007), 839-844, ISSN: 0003-7028, doi: 10.1366/000370207781540169) offenbaren Verfahren zur Abtrennung eines Raman-Spektrums von einem Fluoreszenz-Untergrund, bei denen zwei mit unterschiedlichen Anregungswellenlängen gewonnene Antwortspektren der Probe im Fourier-Raum miteinander verrechnet werden.

US 2006/192 969 A1 offenbart ein Pump-Probe-Verfahren zur Messung von Raman-Spektren nach vorheriger Anregung mit einem Anregungspuls.

(Ramos et al.: "Noise and background removal in Raman spectra of ancient pigments using wavelet transform", Journal of Raman Spectroscopy 36, 9 (2005), 848-856, ISSN: 0377-0486, doi: 10.1002/jrs.1370) offenbart, sowohl die Abtrennung des Raman-Spektrums vom Fluoreszenz-Untergrund als auch eine Unterdrückung von Rauschen mittels Wavelet-Analyse des von der Probe erhaltenen Antwortspektrums vorzunehmen.

US 8,570,507 B1 offenbart ein selbstkonsistentes, iteratives Verfahren zur Abtrennung des Raman-Spektrums vom Fluoreszenz-Untergrund und zur Unterdrückung von Rauschen.

Aufgabe und Lösung

Es ist daher die Aufgabe der Erfindung, ein Verfahren zur Verfügung zu stellen, mit dem ein Raman-Spektrum probenunabhängig und mit einer besseren Genauigkeit als nach dem bisherigen Stand der Technik aus Antwortspektren rekonstruiert werden kann.

Diese Aufgabe wird erfindungsgemäß gelöst durch ein Verfahren gemäß Hauptanspruch sowie durch ein Computerprogrammprodukt. Weitere vorteilhafte Ausgestaltungen ergeben sich aus den darauf rückbezogenen Unteransprüchen.

Gegenstand der Erfindung

Im Rahmen der Erfindung wurde ein Verfahren zur Rekonstruktion eines Raman-Spektrums aus mindestens drei Antwortspektren der von einer Probe als Antwort auf eine optische Anregung generierten Lichtintensität entwickelt. Dabei sind die Antwortspektren Antworten der Probe auf Anregungen mit unterschiedlichen Anregungsspektren. Die Anregungsspektren können insbesondere gegeneinander wellenlängenverschoben sein. In den Antwortspektren kann insbesondere die Lichtintensität über einer Wellenlänge oder Wellenzahl aufgetragen sein.

Erfindungsgemäß werden nun die folgenden Schritte durchgeführt:

Die Antwortspektren werden mit einer Transformation aus ihrem Ursprungsraum auf ihre Darstellungen in einem Arbeitsraum abgebildet. Dabei wird die Abhängigkeit von im Ursprungsraum erklärten Variablen, beispielsweise einer Wellenlänge oder Wellenzahl, durch eine Abhängigkeit von im Arbeitsraum erklärten Variablen, die beispielsweise die Dimension einer Ortsfrequenz-Frequenz haben können, ersetzt. Dementsprechend wird auch die im Ursprungsraum erklärte Lichtintensität in eine im Arbeitsraum erklärte Größe, die beispielweise die Dimension einer Leistungsdichte haben kann, überführt.

Die physikalische Dimension der Variablen und der Darstellungen der Anregungsspektren im Arbeitsraum sind jedoch zweitrangig. Entscheidend ist, dass die Transformation so beschaffen ist, dass

- eine Summe von Spektren im Ursprungsraum auf die Summe der korrespondierenden Darstellungen im Arbeitsraum abgebildet wird, die Transformation also linear ist, und
- eine Variablenverschiebung im Ursprungsraum eine Multiplikation mit einem von dieser Variablenverschiebung abhängigen Verschiebungsfaktor im Arbeitsraum bewirkt.

Diese beiden Eigenschaften bewirken, dass das Raman-Spektrum auch ohne die Annahme, dass die beiden Anregungsspektren infinitesimal zueinander wellenlängenverschoben sind, aus den Antwortspektren extrahiert werden kann.

Sei beispielsweise $i_1(j)$ ein erstes diskretes Antwortspektrum, das mit einem ersten Anregungsspektrum erhalten wurde, und $i_2(j)$ ein zweites Antwortspektrum, das mit einem zweiten, zu dem ersten Anregungsspektrum wellenlängenverschobenen, Anregungsspektrum erhalten wurde. $j$ ist jeweils der Index, unter dem die Intensitätswerte in den Spektren $i_1(j)$ und $i_2(j)$ abgelegt sind. Dieser Index $j$ kann beispielsweise ein Maß für eine Wellenzahl im Antwortspektrum sein.

Die Spektren $i_1(j)$ und $i_2(j)$ lassen sich nun jeweils als Summe aus einem auf die Raman-Streuung zurückgehenden Anteil $r_1(j)$ bzw. $r_2(j)$ und einem Untergrundanteil $f(j)$ schreiben:

$$i_1(j) = f(j) + r_1(j),$$

$$i_2(j) = f(j) + r_2(j).$$

Dabei wurde einzig und allein die Annahme gemacht, dass der Untergrundanteil $f(j)$ für beide Spektren $i_1(j)$ und $i_2(j)$ gleich ist.

Der Untergrund $f(j)$ und das Raman-Signal $r_1(j)$ bzw. $r_2(j)$ unterscheiden sich nun auf Grund ihres unterschiedlichen physikalischen Zustandekommens dahingehend, dass der Untergrund $f(j)$ von der Wellenlängenverschiebung im Anregungsspektrum nicht betroffen ist. Der Untergrund $f(j)$ ist im Wesentlichen dominiert durch Fluoreszenzlicht und Umgebungslicht.

Umgebungslicht ist nicht durch die Anregung der Probe entstanden und daher automatisch von der Anregung unabhängig.

Fluoreszenzlicht wird emittiert, wenn Elektronen im Probenmaterial von einem höheren elektronischen Anregungszustand auf einen tieferen Anregungszustand relaxieren; die freiwerdende Energie wird jeweils in ein abgestrahltes Photon umgemünzt. Die hohe Intensität des Fluoreszenzlichts ist als Zusammenspiel aus Wirkungsquerschnitt und Zustandsdichte ein Resultat der Quantenmechanik.

Wird das Anregungsspektrum also um einen Index $m$ wellenlängenverschoben, bleibt das Untergrund $f(j)$ konstant und das komplette Raman-Spektrum verschiebt sich:

$$r_2(j) = r_1(j-m).$$

Werden N Antwortspektren $i_1(j)$ bis $i_N(j)$ mit sukzessiven Verschiebungen 0, $m_1$, ..., $m_{N-1}$ aufgenommen, so lassen sich diese Antwortspektren somit schreiben als:

$$i_1(j) = f(j) + r(j),$$

$$i_2(j) = f(j) + r(j-m_1),$$

$$\dots$$

$$i_N(j) = f(j) + r(j-m_{N-1}).$$

Hierin ist r(j) das gesuchte Raman-Spektrum.

Die Aufnahme der Spektren $i_1(j)$ bis $i_N(j)$ kann mit jeder experimentellen Ausführungsform der Raman-Spektroskopie erfolgen. Hier können beispielsweise oberflächenverstärkte Techniken, wie SERS (Shifted Excitation Raman Spectroscopy) oder TERS (Tip-Enhanced Raman Spectroscopy), aber auch beispielsweise nichtlineare Techniken, wie SRS (Stimulated Raman Spectroscopy) oder CARS (Coherent Anti-Stokes Raman Spectroscopy), zum Einsatz kommen.

Die Transformation in den Arbeitsraum mit den beanspruchten Eigenschaften macht hieraus:

$$I_1(k) = F(k) + R(k) \cdot 1,$$

$$I_2(k) = F(k) + R(k) \cdot P(k,m_1),$$

$$\dots$$

$$I_N(k) = F(k) + R(k) \cdot P(k,m_{N-1}),$$

worin I(k) die Darstellung von i(j) im Arbeitsraum, F(k) die Darstellung von f(j) im Arbeitsraum, R(k) die Darstellung von r(j) im Arbeitsraum und P der Verschiebungsfaktor, mit dem sich die Wellenlängenverschiebung der Anregungsspektren im Arbeitsraum niederschlägt.

Wird die Differenz zwischen den Darstellungen $I_a(k)$ und $I_b(k)$ zweier Antwortspektren $i_a(k)$ und $i_b(k)$, im Arbeitsraum gebildet, fällt die Darstellung F(k) der unerwünschten Anteile heraus. Es entstehen eine oder mehrere Gleichungen, etwa

$$\Delta I_1(k) = I_1(k) - I_N(k) = R(k) \cdot (1 - P(k,m_{N-1})),$$

$$\Delta I_2(k) = I_2(k) - I_N(k) = R(k) \cdot (P(k,m_1) - P(k,m_{N-1})),$$

$$\dots$$

$$\Delta I_{N-1}(k) = I_{N-1}(k) - I_N(k) = R(k) \cdot (P(k,m_{N-2}) - P(k,m_{N-1})).$$

Jede dieser Gleichungen setzt die Differenz aus zwei Darstellungen $I_a(k)$ und $I_b(k)$ in Beziehung zum Produkt aus der Darstellung R(k) des gesuchten Raman-Spektrums r(j) im Arbeitsraum mit einer Linearkombination (Differenz) von

Verschiebungsfaktoren $P(k,m_1)$, ..., $P(k,m_{N-1})$. Der Vektor $\vec{R} = R(k)$ ist für alle k gleich und kann über die Lösung eines Gleichungssystems, das gegeben ist durch

$$\Delta \mathbf{I} = \mathbf{Q} \cdot \vec{R},$$

berechnet werden.

Hierin durchläuft der Zeilenindex der Matrix ΔI alle Werte von k, während der Spaltenindex von ΔI die Werte von 1 bis N-1 durchläuft. In der Matrix **Q**, deren Zeilenindex alle Werte von k durchläuft und deren Spaltenindex von 1 bis N-1 läuft, sind alle Linearkombinationen der Verschiebungsfaktoren zusammengefasst. Gemäß dem Verfahren wird $\vec{R}$ im Arbeitsraum als Lösung ermittelt.

Es wurde erkannt, dass auf diese Weise keine Ableitung des gesuchten Raman-Spektrums mehr ermittelt wird, sondern vielmehr eine Darstellung dieses Spektrums selbst im Arbeitsraum. Dementsprechend ist die Bestimmung dieser Darstellung nicht mehr darauf angewiesen, dass die Wellenlängenverschiebung der Anregungsspektren zueinander infinitesimal klein und somit die Differenz zweier Antwortspektren zu einer Ableitung des Raman-Spektrums äquivalent ist. Indem diese Bedingung fortfällt, entfällt zugleich weitestgehend die Kopplung des Anregungsspektrums an die zu untersuchende Probe. Zur Messung von Raman-Spektren an unterschiedlichen Proben ist dann kein Laser mehr notwendig, der kontinuierlich durchstimmbar ist. Es müssen nur noch wenige diskrete Linien erzeugt werden, was mit einem deutlich unkomplizierteren und preiswerteren Aufbau möglich ist.

Weiterhin lässt sich auf organische Weise die in drei oder mehr Antwortspektren enthaltene Information aggregieren, um die Genauigkeit der Rekonstruktion von $\vec{R}$ weiter zu steigern. Hat das Gleichungssystem genau zwei Gleichungen, hat es eine eindeutige Lösung, die gegeben ist durch

$$R(k) = \frac{I_1(k) - I_2(k)}{1 - P(k, m_1)}.$$

Hat das Gleichungssystem mehr Gleichungen, ist es überbestimmt. Da die Messungen der Intensitätsspektren i(j) immer mit Rauschen und anderen Messunsicherheiten behaftet sein werden, lässt sich mit einem solchen überbestimmten System ein Ausgleich schaffen, der die Auswirkung der Messunsicherheiten auf das Endergebnis für $\vec{R}$ minimiert.

Das als Lösung des Gleichungssystems erhaltene Endergebnis für $\vec{R}$ kann bei geeigneter Wahl des Arbeitsraums unmittelbar im Arbeitsraum weiterverwendet werden. In einer besonders vorteilhaften Ausgestaltung der Erfindung wird jedoch die Darstellung $\vec{R}$ des gesuchten Raman-Spektrums $\vec{r}$ durch die Inverse der Transformation in das gesuchte Raman-Spektrum $\vec{r}$ im Ursprungsraum überführt.

Die Antwortspektren können beispielsweise jeweils in Form diskreter Daten vorliegen. So ist beispielsweise der Bereich von Wellenzahlen, für die die Intensität des Antwortspektrums mit einem gegebenen optischen Aufbau messbar ist, in der Regel begrenzt, und die Intensität liegt auch innerhalb dieses Bereiches nur für bestimmte diskrete Wellenzahlen vor. Vorteilhaft wird daher eine diskrete Form der Transformation auf die Antwortspektren angewendet. Diskrete Transformationen sind genau auf den vorliegenden Fall optimiert, dass Daten nicht überall und nicht mit beliebig feiner Auflösung vorliegen.

Besonders vorteilhaft wird in diesem Zusammenhang die diskrete Fourier-Transformation, DFT, als Transformation gewählt. Der Verschiebungsfaktor P(k,m) für eine Wellenlängenverschiebung m zwischen den Anregungsspektren ist dann ein Phasenfaktor und gegeben durch

$$P(k, m) = \exp(-2\pi \cdot i \cdot k \cdot m).$$

Antwortspektren, die in Form diskreter Daten vorliegen, können jedoch in einer weiteren vorteilhaften Ausgestaltung der Erfindung auch zu kontinuierlichen Funktionsverläufen interpoliert werden. Hierdurch kann beispielsweise bereits eine erste Glättung und Filterung der Daten erfolgen, um den Einfluss von Rauschen und anderen Messunsicherheiten zurückzudrängen. Weiterhin vereinfacht sich die Rechnung, wenn ein kontinuierlicher Funktionsverlauf vorliegt, da dann insbesondere eine kontinuierliche Form der Transformation auf die kontinuierlichen Funktionsverläufe der Antwortspektren angewendet werden kann. Schließlich lassen sich die kontinuierlichen Funktionsverläufe in sehr stark komprimierter Form speichern, beispielsweise als Parametersätze für einen parametrisierten Funktionsansatz.

In einer weiteren besonders vorteilhaften Ausgestaltung der Erfindung wird eine Transformation mit Basisfunktionen gewählt, die nur auf einem begrenzten Teilgebiet des Ursprungsraums von Null verschieden sind. Die Transformation ist dann besonders gut an die Situation bei realen Messungen angepasst, dass das Antwortspektrum nur in einem begrenzten Bereich von Wellenzahlen verfügbar ist. Dass die Daten des Antwortspektrums nur mit einer endlichen Auflösung vorliegen, lässt sich "heilen", indem die diskreten Daten zu kontinuierlichen Funktionsverläufen interpoliert werden.

In diesem Zusammenhang wird besonders vorteilhaft die Wavelet-Transformation als Transformation gewählt. Wavelets sind speziell dazu konstruiert, Detailinformation in aperiodischen Funktionsverläufen abzubilden, und eignen sich darüber hinaus insbesondere auch, um die Antwortspektren zusätzlich zu entrauschen. Beispielsweise wird bei der Wavelet-Transformation die wesentliche Information über den Funktionsverlauf in einigen wenigen Wavelet-Koeffizien-

ten im Arbeitsraum aufkonzentriert, während weißes Rauschen nach der Wavelet-Transformation im Arbeitsraum wiederum als weißes Rauschen vorliegt, welches auf alle verfügbaren Wavelet-Koeffizienten gleichzeitig verschmiert ist. Es können beispielsweise alle Wavelet-Koeffizienten unterhalb einer bestimmten Schwelle auf Null gesetzt werden (Thresholding), um den größten Anteil des Rauschens zu entfernen bei zugleich guter Erhaltung der aperiodischen Details im Funktionsverlauf. Dabei wirkt jeder Eingriff in einen Wavelet-Koeffizienten im Arbeitsraum immer nur lokal für einen bestimmten Bereich an Wellenzahlen, während hingegen etwa jeder Eingriff in einen Fourier-Koeffizienten nach einer Fourier-Tranformation in einen Frequenzraum als Arbeitsraum den Beitrag einer Basisfunktion global für alle Wellenzahlen ändert.

Vorteilhaft werden somit die Antwortspektren, und/oder ihre Darstellungen im Arbeitsraum, vor der Lösung der Gleichungen entrauscht. Dadurch wird vermieden, dass das in den Antwortspektren enthaltene Rauschen beim Lösen der Gleichungen deutlich verstärkt wird und möglicherweise das eigentliche Ergebnis überdeckt. Die Wavelet-Transformation liefert ein Beispiel dafür, dass dieses Entrauschen im Arbeitsraum stattfinden kann. Das Entrauschen kann jedoch insbesondere auch vor der Abbildung in den Arbeitsraum, und/oder vor der Interpolation diskreter Daten zu kontinuierlichen Funktionsverläufen, durchgeführt werden, um eine Verstärkung des Rauschens in diesen Verarbeitungsstufen zu vermeiden.

In einer besonders vorteilhaften Ausgestaltung der Erfindung wird zur Lösung der Gleichungen die Tikhonov-Regularisierung, insbesondere die Methode der kleinsten Fehlerquadrate, gewählt. Diese Lösungsverfahren liefern auch bei stark überbestimmten Gleichungssytemen Lösungen, die einen optimalen Ausgleich zwischen den in den Gleichungen verkörperten widersprüchlichen Aussagen darstellen.

Prinzipiell lassen sich zur Lösung der Gleichungen alle Ausgleichungs- und Approximationsverfahren, sowie auch alle iterativen und direkten Gleichungssystemlösungsverfahren, einsetzen. Die Tikhonov-Regularisierung ist ein Ausgleichungs- bzw. Approximationsverfahren. Sie besitzt im Wesentlichen zwei Parameter als Freiheitsgrade. Werden diese beiden Parameter zu Null gesetzt, ergibt sich als Spezialfall die Methode der kleinsten Fehlerquadrate.

In einer weiteren besonders vorteilhaften Ausgestaltung der Erfindung wird mindestens eine Linienbreite mindestens eines Anregungsspektrums aus dem korrespondierenden Antwortspektrum herauskorrigiert. Die Linienbreite ist mit deutlich höherer Auflösung bekannt als der Auflösung, in der das Antwortspektrum vorliegt. Ihre Berücksichtigung bereits an dieser Stelle minimiert ihre Auswirkungen auf das letztendlich rekonstruierte Raman-Spektrum.

In einer weiteren besonders vorteilhaften Ausgestaltung wird mindestens ein Anregungsspektrum zeitlich periodisch moduliert. Über eine Analyse, welche Anteile des Antwortspektrums sich mit der gleichen Modulation ändern, kann dann die Unterscheidung zwischen dem Raman-Spektrum und unerwünschten Anteilen des Antwortspektrums noch weiter verfeinert werden.

Das Verfahren gemäß der Erfindung kann nicht nur im Zusammenhang mit neu aufgenommenen Antwortspektren angewendet werden. Vielmehr lässt sich das Verfahren ausdrücklich auch auf bereits vorhandene Antwortspektren anwenden, die beispielsweise zum Zwecke einer Auswertung mit der SERDS- oder MRS-Methode angefertigt wurden. Beispielsweise können so auch noch neue Erkenntnisse an Proben gewonnen werden, die für eine erneute Aufnahme von Antwortspektren nicht mehr zugänglich sind. So können etwa biologische Proben nach einiger Zeit unbrauchbar werden, und/oder kostbare Proben können lediglich leihweise für einen kurzen Zeitraum zur Verfügung stehen.

Das Verfahren gemäß der Erfindung erhöht auch die Resistenz von Raman-Messungen gegen Umgebungslicht. Nach dem bisherigen Stand der Technik konnten Raman-Spektren nur in einem abgedunkelten Raum aufgenommen werden. Insbesondere bei dem Einsatz der Raman-Spektroskopie im klinischen Bereich war es bislang sehr störend, für jede Aufnahme eines Spektrums die Beleuchtung abdunkeln zu müssen.

Das Verfahren kann insbesondere unabhängig von dem zur Gewinnung der Antwortspektren verwendeten Messaufbau in Software implementiert sein, und seine Anwendung kann zeitlich der Aufnahme der Spektren nachgelagert sein. Die Erfindung bezieht sich daher auch auf ein Computerprogrammprodukt mit maschinenlesbaren Anweisungen, die, wenn sie auf einem Computer und/oder auf einem eingebetteten System ausgeführt werden, den Computer bzw. das eingebettete System dazu veranlassen, ein Verfahren gemäß der Erfindung auszuführen.

Spezieller Beschreibungteil

Nachfolgend wird der Gegenstand der Erfindung an Hand von Figuren erläutert, ohne dass der Gegenstand der Erfindung hierdurch beschränkt wird. Es ist gezeigt:

Figur 1: Skizze des Verfahrens gemäß der Erfindung.
Figur 2: Beispiele für Messaufbauten, mit denen das Verfahren genutzt werden kann.

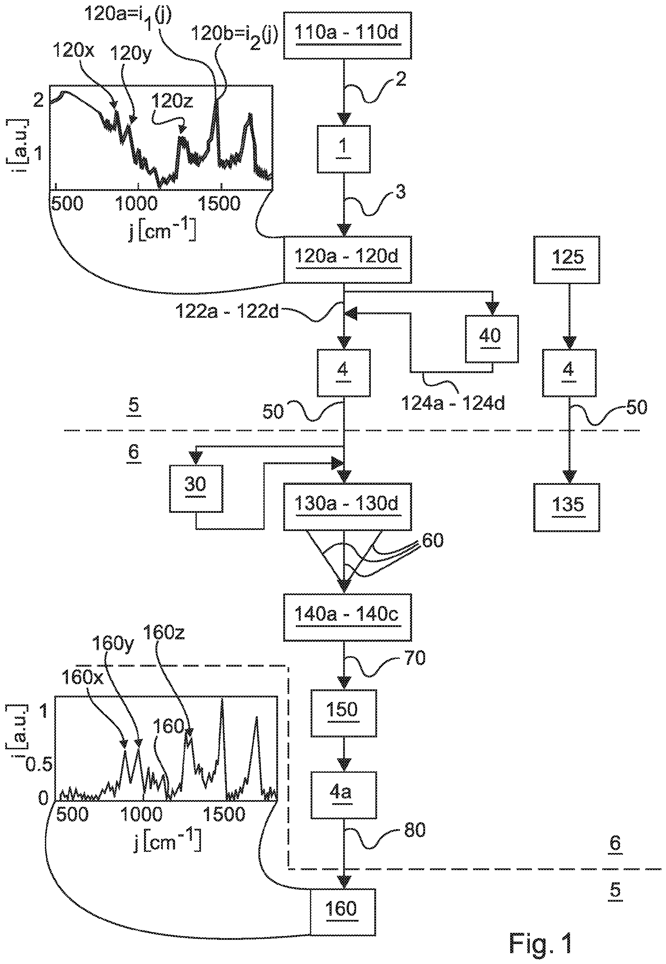

Figur 1 verdeutlicht skizzenhaft das Verfahren gemäß der Erfindung. Das Verfahren geht davon aus, dass die Probe 1 eine optische Anregung 2 in Form von vier unterschiedlichen Anregungsspektren 110a-110d erhalten hat. Dementsprechend hat die von der Probe 1 als Antwort generierte Lichtintensität 3 vier unterschiedliche Antwortspektren 120a-120d, von denen die Antwortspektren 120a und 120b in Figur 1 beispielhaft dargestellt sind.

Die Antwortspektren 120a-120d enthalten jeweils einen Anteil r(j), der auf Raman-Streuung in der Probe 1 zurückgeht und somit von der Anregung mit dem jeweils zugeordneten Anregungsspektrum 110a-110d herrührt. Dieser Anteil r(j) ist jedoch von einem starken Untergrundsignal f(j) auf Grund von Fluoreszenz überlagert. Mit dem Verfahren gemäß der Erfindung wird der Raman-Anteil r(j) rekonstruiert und der Einfluss des Untergrundsignals f(j) unterdrückt.

Zu diesem Zweck werden die Antwortspektren 120a-120d, die in Form diskreter Daten vorliegen, mit einer Transformation 4, hier der diskreten Fourier-Transformation, DFT, vom Ursprungsraum 5 in den Arbeitsraum 6 überführt (Schritt 50). Optional können die diskreten Daten 122a-122d der Antwortspektren 120a-120d zu kontinuierlichen Funktionsverläufen 124a-124d interpoliert werden. Es kann dann beispielsweise auch eine Transformation 4 genutzt werden, die mit kontinuierlichen Funktionsverläufen arbeitet.

Die Transformation 4 ist zum Einen linear, d.h., die Summe der Signalbeiträge f(j) und r(j) im Ursprungsraum 5 wird in die Summe der hierzu korrespondierenden Darstellungen F(k) und R(k) im Arbeitsraum überführt. Zum Anderen bewirkt eine Variablenverschiebung 125 im Ursprungsraum bei der Abbildung 50 durch die Transformation 4 in den Arbeitsraum 6 eine Multiplikation mit einem von der Variablenverschiebung 125 abhängigen Verschiebungsfaktor 135 im Arbeitsraum 6. Im Falle der DFT als Transformation 4 ist dieser Verschiebungsfaktor 135 ein Phasenfaktor, d.h.eine komplexe Exponentialfunktion, in deren Argument ein Produkt der Variablenverschiebung 125 mit der zur Wellenzahl j im Ursprungsraum 5 korrespondierenden Variablen k im Arbeitsraum 6 steht. k ist im Falle der DFT eine Frequenzdarstellung der Wellenzahl j, die ihrerseits die Dimension einer Ortsfrequenz hat, hat also die Dimension einer Ortsfrequenz-Frequenz. Es ist jedoch für die weitere Auswertung nicht relevant, inwieweit diese Dimension physikalisch interpretierbar ist. Der entscheidende Punkt der Transformation 4 ist, dass sie auf die unerwünschten Signalbeiträge f(j) in irgendeiner Form anders wirkt als auf den Raman-Anteil r(j), so dass die hierzu korrespondierenden Darstellungen F(k) und R(k) im Arbeitsraum 6 klarer voneinander unterschieden werden können als die ursprünglichen Signalbeiträge f(j) und r(j) im Ursprungsraum 5.

Die Transformation 4 liefert Darstellungen 130a-130d der Antwortspektren 120a-120d im Arbeitsraum 6. In Figur 1 ist beispielhaft ein zusätzlicher optionaler Entrauschungsschritt 30 eingezeichnet, der im Zuge der Transformation 4 unmittelbar auf den Darstellungen 130a-130d durchgeführt wird. Bei der FFT als Transformation 4 können die Darstellungen 130a-130d beispielsweise mit einem Tiefpass gefiltert werden. Bei der Wavelet-Transformation als Transformation 4 können beispielsweise alle Wavelet-Koeffizienten in den Darstellungen 130a-130d, die einen bestimmten Schwellwert nicht überschreiten, auf Null gesetzt werden.

Im Arbeitsraum 6 werden die Darstellungen 130a-130d im Schritt 60 voneinander subtrahiert; in dem in Figur 1 gezeigten Beispiel wird die letzte Darstellung 130d als Subtrahend verwendet. Es entstehen drei Gleichungen 140a-140c, in denen auf einer Seite die Differenz zwischen den jeweiligen Intensitäten und auf der anderen Seite das Produkt aus der Darstellung 150 des gesuchten Raman-Spektrums 160 mit einer Linearkombination von Verschiebungsfaktoren 135 steht. Im Falle der DFT als Transformation 4 ist diese Linearkombination eine Differenz von Exponentialfunktionen.

Die Verschiebungsfaktoren 135 hängen sowohl von der Variablen k, die im Arbeitsraum 6 zur Wellenzahl bzw. zum Wellenzahlindex j korrespondiert, als auch von der Wellenlängenverschiebung m zwischen den Anregungsspektren 110a-110d. Die Verschiebungsfaktoren 135 hängen jedoch nicht explizit von der Darstellung 150 des gesuchten Raman-Spektrums 160 ab. Das Gleichungssystem 140a-140c ist also in dieser Darstellung 150 linear. Im Schritt 70 wird die Darstellung 150 als Lösung des Gleichungssystems 140a-140c ermittelt.

Durch die Inverse 4a der Transformation 4, hier die inverse DFT, wird im Schritt 80 schließlich die Darstellung 150 in den Ursprungsraum 5 zurücktransformiert. Dadurch wird in dem Ursprungsraum 5 das gesuchte Raman-Spektrum 160 ermittelt. Das Ergebnis ist in Figur 1 beispielhaft eingezeichnet.

Der Vergleich mit den ebenfalls zeichnerisch dargestellten Antwortspektren 120a und 120b verdeutlicht den Gewinn, der mit der Anwendung des Verfahrens erzielt wurde. Auffällig ist insbesondere, dass drei Raman-Peaks 160x, 160y, 160z, deren Entsprechungen 120x, 120y und 120z in den ursprünglichen Antwortspektren 120a und 120b deutlich weniger stark ausgeprägt und in ihrer Struktur stark verwaschen sind, in dem rekonstruierten Raman-Spektrum 160 sehr klar hervortreten. Weiterhin wird auch die Interpretation des Raman-Spektrums 160 nicht mehr durch einen langsam mit der Wellenzahl j veränderlichen Untergrund erschwert.

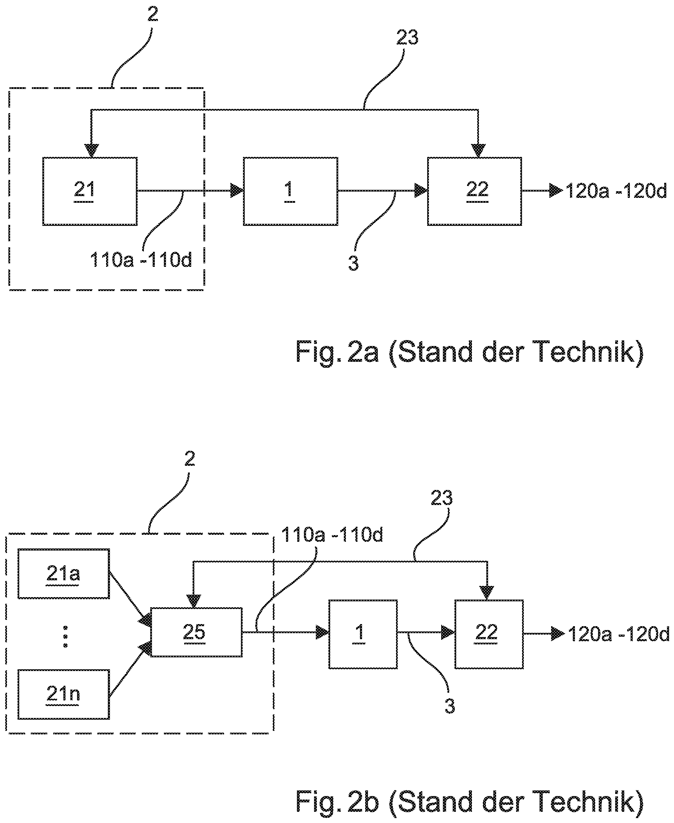

Figur 2 zeigt beispielhaft Messaufbauten zur Gewinnung von Antwortspektren 120a-120d.

Figur 2a zeigt einen Aufbau gemäß Stand der Technik, wie er für SERDS- und MRS-Messungen verwendet wird. Zur optischen Anregung 2 dient ein durchstimmbarer Laser 21, der die Anregungsspektren 110a-110d auf die Probe 1 einstrahlt. Die von der Probe 1 generierte Lichtintensität 3 wird mit einem Spektrometer 22 analysiert und zu Antwortspektren 120a-120d weiterverarbeitet. Das Spektrometer 22 koordiniert über die Synchronisationsleitung 23 die Abstimmung des Lasers 21 mit der Datenaufnahme.

Figur 2b zeigt einen konstruktiv vereinfachten Aufbau gemäß Stand der Technik, dessen Nutzung in Kombination mit dem Verfahren gemäß der Erfindung finanziell vorteilhaft ist. An Stelle eines einzelnen durchstimmbaren Lasers 21 sind nun verschiedene Laser 21a-21n mit festen Wellenlängen vorgesehen. Über einen optischen Schalter 25 wird eingestellt, welche Wellenlängen zu jeder Zeit als Anregungsspektrum 110a-110d auf die Probe 1 eingestrahlt werden. Der optische Schalter 25 wird über die Synchronisationsleitung 23 vom Spektrometer 22 angesteuert.

Bei gleicher Laserleistung kann die Kombination der Laser 21a-21n mit dem Schalter 25 deutlich preiswerter sein als ein einzelner durchstimmbarer Laser 21. Dafür liegen die Wellenlängen der Laser 21a-21n um einen bestimmten Mindestbetrag auseinander. Dementsprechend gibt es auch einen Mindestbetrag für die zwischen zwei Anregungsspektren 110a-110d einstellbare Wellenlängenverschiebung. Die Auswertung der Antwortspektren 120a-120d nach dem bisherigen Stand der Technik war darauf angewiesen, dass die Wellenlängenverschiebung in Relation zu den Raman-Banden der Probe 1 als infinitesimal anzusehen war. Der besagte Mindestbetrag für die Wellenlängenverschiebung erfüllt diese Bedingung entweder nicht oder nur für bestimmte Proben 1. Dementsprechend war der in Figur 2b gezeigte Aufbau in der Praxis nur eingeschränkt verwendbar. Die verbesserte Auswertung der Antwortspektren 120a-120d gemäß der Erfindung setzt keine enge Grenze mehr für die Wellenlängenverschiebung, so dass ohne Verlust an Genauigkeit auch mit dem in Figur 2b gezeigten Aufbau gearbeitet werden kann.

Die Arbeiten, die zu der vorliegenden Erfindung geführt haben, wurden im Rahmen des Projekts "PhotoSkin" vom Bundesministerium für Bildung und Forschung (BMBF) unter dem Förderkennzeichen 13N13243, sowie auch durch das 7. Forschungsrahmenprogramm der Europäischen Union, gefördert.

**Bezugszeichenliste**

| | |
|---|---|
| 1 | Probe |
| 2 | optische Anregung der Probe 1 |
| 3 | von Probe 1 auf Anregung 2 generrierte Lichtintensität |
| 4 | Transformation von Ursprungsraum 5 in Arbeitsraum 6 |
| 4a | Inverse der Transformation 4 |
| 5 | Ursprungsraum |
| 6 | Arbeitsraum |
| 21 | durchstimmbarer Laser |
| 21a-21n | separate Laser mit festen Wellenlängen |
| 22 | Spektrometer |
| 23 | Synchronisierungsleitung |
| 25 | optischer Schalter |
| 30 | Entrauschen der Spektren 120a-120d bzw. Darstellungen 130a-130d |
| 40 | Interpolation der kontinuierlichen Verläufe 124a-124d |
| 50 | Abbildung vom Ursprungsraum 5 in den Arbeitsraum 6 |
| 60 | Aufstellen der Gleichungen 140a-140c |
| 70 | Lösen der Gleichungen 140a-140c nach Darstellung 150 |
| 80 | Abbildung der Darstellung 150 in den Ursprungsraum 5 |
| 110a-110d | Anregungsspektren |
| 120a-120d | Antwortspektren |
| 120x-120z | Peaks in Antwortspektren 120a-120d |
| 122a-122d | diskrete Daten der Antwortspektren 120a-120d |
| 124a-124d | interpolierte kontinuierliche Verläufe der Spektren 120a-120d |
| 125 | Variablenverschiebung im Ursprungsraum 5 |
| 130a-130d | Darstellung der Antwortspektren 120a-120d im Arbeitsraum 6 |
| 135 | Verschiebungsfaktor im Arbeitsraum 6 |
| 140a-140c | Gleichungen in der Darstellung 150 des Raman-Spektrums 160 |
| 150 | Darstellung des Raman-Spektrums 160 im Arbeitsraum 6 |
| 160 | rekonstruiertes Raman-Spektrum |
| 160x-160z | Peaks in rekonstruiertem Raman-Spektrum 160 |
| $f(j)$ | Untergrundanteil in den Antwortspektren 120a-120d |
| $F(k)$ | Darstellung des Untergrundanteils $f(j)$ im Arbeitsraum 6 |
| $i(j)$, $i_{1-N}(j)$ | Antwortspektren 120a-120d im Ursprungsraum 5 |
| $I(k)$, $I_{1-N}(k)$ | Darstellung der Spektren 120a-120d im Arbeitsraum 6 |
| $\Delta I$ | Differenz zwischen Spektren 120a-120d |
| $j$ | Wellenzahl bzw. Wellenzahlindex im Ursprungsraum 5 |
| $k$ | zu $j$ korrespondierende Variable im Arbeitsraum 6 |
| $m$, $m_{1,...,N-1}$ | Wellenlängenverschiebung |
| $N$ | Anzahl der aufgenommenen Spektren 120a-120d |

P(k,m)      Verschiebungsfaktor 135 im Arbeitsraum 6
**Q**        Linearkombinationen von Verschiebungsfaktoren
r(j), $r_{1,2}(j)$  Raman-Anteil in den Antwortspektren 120a-120d
R(k)        Darstellung 150 des gesuchten Raman-Signals 160 im Raum 6

## Patentansprüche

1.  Verfahren zur Rekonstruktion eines Raman-Spektrums (160) aus Antwortspektren (120a-120d) der von einer Probe (1) als Antwort auf eine optische Anregung (2) generierten Lichtintensität (3), wobei die Antwortspektren (120a-120d) Antworten der Probe (1) auf Anregungen (2) mit unterschiedlichen Anregungsspektren (110a-110d) sind, wobei
    die Antwortspektren (120a-120d) mit einer Transformation (4) aus ihrem Ursprungsraum (5) auf ihre Darstellungen (130a-130d) in einem Arbeitsraum (6) abgebildet werden (50), wobei die Transformation (4) so beschaffen ist, dass

    eine Summe von Spektren (120a-120d) im Ursprungsraum (5) auf die Summe der korrespondierenden Darstellungen (130a-130d) im Arbeitsraum (6) abgebildet wird und
    eine Variablenverschiebung (125) im Ursprungsraum (5) eine Multiplikation mit einem von dieser Variablenverschiebung (125) abhängigen Verschiebungsfaktor (135) im Arbeitsraum (6) bewirkt;

    **gekennzeichnet durch** folgende Schritte:

    im Arbeitsraum (6) werden Gleichungen (140a-140c) aufgestellt (60), die jeweils die Differenz zwischen mindestens zwei Darstellungen (130a-130d) von Antwortspektren (120a-120d) in Beziehung setzen zum Produkt aus der Darstellung (150) des gesuchten Raman-Spektrums (160) im Arbeitsraum mit einer Linearkombination von Verschiebungsfaktoren (135);
    aus den Gleichungen (140a-140c) wird die Darstellung (150) des gesuchten Raman-Spektrums (160) im Arbeitsraum (6) als Lösung ermittelt (70),
    wobei drei oder mehr Antwortspektren (120a-120d) verwendet werden.

2.  Verfahren nach Anspruch 1, **dadurch gekennzeichnet, dass** das System der Gleichungen (140a-140c) überbestimmt ist.

3.  Verfahren nach einem der Ansprüche 1 bis 2, **dadurch gekennzeichnet, dass** mindestens vier Antwortspektren (120a-120d) verwendet werden.

4.  Verfahren nach einem der Ansprüche 1 bis 3, **dadurch gekennzeichnet, dass** die Darstellung (150) des gesuchten Raman-Spektrums (160) durch die Inverse (4a) der Transformation (4) in das gesuchte Raman-Spektrum (160) überführt wird (80).

5.  Verfahren nach einem der Ansprüche 1 bis 4, **dadurch gekennzeichnet, dass** eine diskrete Form der Transformation (4) auf Antwortspektren (120a-120d), die in Form diskreter Daten (122a-122d) vorliegen, angewendet wird (50).

6.  Verfahren nach Anspruch 5, **dadurch gekennzeichnet, dass** die diskrete Fourier-Transformation, DFT, als Transformation (4) gewählt wird.

7.  Verfahren nach einem der Ansprüche 1 bis 4, **dadurch gekennzeichnet, dass** Antwortspektren (120a-120d), die in Form diskreter Daten (122a-122d) vorliegen, zu kontinuierlichen Funktionsverläufen (124a-124d) interpoliert werden (40).

8.  Verfahren nach Anspruch 7, **dadurch gekennzeichnet, dass** eine kontinuierliche Form der Transformation (4) auf die kontinuierlichen Funktionsverläufe (124a-124d) der Antwortspektren (120a-120d) angewendet wird (50).

9.  Verfahren nach einem der Ansprüche 1 bis 8, **dadurch gekennzeichnet, dass** eine Transformation (4) mit Basisfunktionen gewählt wird, die nur auf einem begrenzten Teilgebiet des Ursprungsraums (5) von Null verschieden sind.

10. Verfahren nach Anspruch 9, **dadurch gekennzeichnet, dass** die Wavelet-Transformation als Transformation (4) gewählt wird.

**11.** Verfahren nach einem der Ansprüche 1 bis 10, **dadurch gekennzeichnet, dass** die Antwortspektren (120a-120d), und/oder ihre Darstellungen (130a-130d) im Arbeitsraum (6), vor der Lösung (70) der Gleichungen (140a-140c) entrauscht werden (30).

**12.** Verfahren nach einem der Ansprüche 1 bis 11, **dadurch gekennzeichnet, dass** zur Lösung (70) der Gleichungen (140a-140c) die Tikhonov-Regularisierung, insbesondere die Methode der kleinsten Fehlerquadrate, gewählt wird.

**13.** Verfahren nach einem der Ansprüche 1 bis 12, **dadurch gekennzeichnet, dass** mindestens eine Linienbreite mindestens eines Anregungsspektrums (110a-110d) aus dem korrespondierenden Antwortspektrum (120a-120d) herauskorrigiert wird.

**14.** Verfahren nach einem der Ansprüche 1 bis 13, **dadurch gekennzeichnet, dass** mindestens ein Anregungsspektrum (110a-110d) zeitlich periodisch moduliert wird.

**15.** Computerprogrammprodukt, enthaltend maschinenlesbare Anweisungen, die, wenn sie auf einem Computer und/oder auf einem eingebetteten System ausgeführt werden, den Computer bzw. das eingebettete System dazu veranlassen, ein Verfahren nach einem der Ansprüche 1 bis 14 auszuführen.

**Claims**

**1.** A method for the reconstruction of a Raman spectrum (160) from response spectra (120a-120d) of the light intensity (3) generated by a sample (1) in response to an optical excitation (2), wherein the response spectra (120a-120d) are responses of the sample (1) to excitations (2) with different excitation spectra (110a-110d),
wherein the response spectra (120a-120d) are mapped (50) from their original space (5) to their representations (130a-130d) in a working space (6) by means of a transformation (4),
wherein the transformation (4) is configured such that:

a sum of spectra (120a-120d) in the original space (5) is mapped to the sum of the corresponding representations (130a-130d) in the working space (6) and
a variables shift (125) in the original space (5) causes a multiplication with a shift factor (135) that is dependent on this variables shift (125) in the working space (6);

**characterized by** the following steps:

in the working space (6), equations (140a-140c) are set up (60) that each put the difference between at least two representations (130a-130d) of response spectra (120a-120d) into a relationship with the product of a representation (150) of the sought Raman spectrum (160) in the working space with a linear combination of shift factors (135);
from the equations (140a-140c), the representation (150) of the sought Raman spectrum (160) in the working space (6) is determined (70) as a solution,
wherein three or more response spectra (120a-120d) are used.

**2.** The method of claim 1, **characterized in that** the system of the equations (140a-140c) is overdetermined.

**3.** The method of any one of claims 1 to 2, **characterized in that** at least four response spectra (120a-120d) are used.

**4.** The method of any one of claims 1 to 3, **characterized in that** the representation (150) of the sought Raman spectrum (160) is transformed (80) into the sought Raman spectrum (160) through the inverse (4a) of the transformation (4).

**5.** The method of any one of claims 1 to 4, **characterized in that** a discrete form of the transformation (4) is applied to response spectra (120a-120d) that are provided in the form of discrete data (122a-122d).

**6.** The method of claim 5, **characterized in that** the discrete Fourier transform, DFT, is selected as transformation (4).

7. The method of any one of claims 1 to 4, **characterized in that** response spectra (120a-120d) that are provided in the form of discrete data (122a-122d) are interpolated (40) to continuous functional courses (124a-124d).

8. The method of claim 7, **characterized in that** a continuous form of the transformation (4) is applied (50) to the continuous functional courses (124a-124d) of the response spectra (120a-120d).

9. The method of any one of claims 1 to 8, **characterized in that** a transformation (4) with basis functions that are different from zero only in a limited partial area of the original space (5) is chosen.

10. The method of claim 9, **characterized in that** the wavelet transform is chosen as transformation (4).

11. The method of any one of claims 1 to 10, **characterized in that** the response spectra (120a-120d), and/or their representations (130a-130d) in the working space (6), are de-noised (30) before the solving (70) of the equations (140a-140c).

12. The method of any one of claims 1 to 11, **characterized in that** the Tikhonov regularization, and in particular the least squared error method, is chosen for the solving (70) of the equations (140a-140c).

13. The method of any one of claims 1 to 12, **characterized in that** at least one line width of at least one excitation spectrum (110a-110d) is corrected out of the corresponding response spectrum (120a-120d).

14. The method of any one of claims 1 to 13, **characterized in that** at least one excitation spectrum (110a-110d) is modulated periodically in time.

15. A computer program product, comprising machine-readable instructions that, when executed on a computer, and/or on an embedded system, cause the computer, respectively the embedded system, to perform a method according to any one of claims 1 to 14.

**Revendications**

1. Procédé de reconstruction d'un spectre Raman (160) à partir de spectres de réponse (120a à 120d) de l'intensité lumineuse (3) générée par un échantillon (1) en réponse à une excitation optique (2), dans lequel les spectres de réponse (120a à 120d) sont des réponses de l'échantillon (1) à des excitations (2) avec différents spectres d'excitation (110a à 110d), **caractérisé par** les étapes suivantes consistant à :

   reproduire (50) les spectres de réponse (120a à 120d) par une transformée (4) à partir de leur espace d'origine (5) sur leurs représentations (130a à 130d) dans un espace de travail (6), la transformée (4) étant réalisée de sorte que

   une somme des spectres (120a à 120d) dans l'espace d'origine (5) est reproduite sur la somme des représentations (130a à 130d) correspondantes dans l'espace de travail (6) et
   un décalage de variables (125) dans l'espace d'origine (5) entraîne une multiplication par un facteur de décalage (135) dans l'espace de travail (6) en fonction de ce décalage de variables (125), **caractérisé par** les étapes suivantes consistant à :

   établir (60), dans l'espace de travail (6), des équations (140a à 140c) qui mettent respectivement en relation la différence entre au moins deux représentations (130a à 130d) de spectres de réponse (120a à 120d) avec le produit de la représentation (150) du spectre Raman (160) recherché dans l'espace de travail avec une combinaison linéaire de facteurs de décalage (135),
   à partir des équations (140a à 140d), déterminer (70) comme solution la représentation (150) du spectre Raman (160) recherché dans l'espace de travail (6),
   dans lequel trois spectres de réponse (120a-120d) ou plus sont utilisés.

2. Procédé selon la revendication 1, **caractérisé en ce que** le système d'équations (140a à 140c) est hyperstatique.

3. Procédé selon l'une des revendications 1 à 2, **caractérisé en ce qu'**au moins quatre spectres de réponse (120a à 120d) sont utilisés.

**4.** Procédé selon l'une des revendications 1 à 3, **caractérisé par** l'étape consistant à obtenir (80) la représentation (150) du spectre Raman (160) recherché par l'inverse (4a) de la transformée (4) dans le spectre Raman (160) recherché.

**5.** Procédé selon l'une des revendications 1 à 4, **caractérisé par** l'étape consistant à appliquer (50) une forme discrète de la transformée (4) aux spectres de réponse (120a à 120d) qui existent sous forme de données discrètes (122a à 122d).

**6.** Procédé selon la revendication 5, **caractérisé en ce que** la transformée (4) choisie est une transformée de Fourier discrète (DFT).

**7.** Procédé selon l'une des revendications 1 à 4, **caractérisé en ce que** les spectres de réponse (120a à 120d) qui existent sous forme de données discrètes (122a à 122d) sont interpolés par des courbes de fonctions continues (124a à 124d).

**8.** Procédé selon la revendication 7, **caractérisé en ce qu'**une forme continue de la transformée (4) est appliquée aux courbes de fonctions continues (124a à 124d) des spectres de réponse (120a à 120d).

**9.** Procédé selon l'une des revendications 1 à 8, **caractérisé en ce qu'**une transformée (4) est choisie avec des fonctions de base qui sont différentes de zéro uniquement sur un domaine partiel limité de l'espace d'origine (5).

**10.** Procédé selon la revendication 9, **caractérisé en ce que** la transformée (4) choisie est une transformée en ondelettes.

**11.** Procédé selon l'une des revendications 1 à 10, **caractérisé par** l'étape consistant à débruiter (30) les spectres de réponse (120a à 120d) et/ou leurs représentations (130a à 130d) dans l'espace de travail (6) avant de résoudre (70) les équations (140a à 140c).

**12.** Procédé selon l'une des revendications 1 à 11, **caractérisé en ce que** la régularisation de Tikhonov, en particulier la méthode des moindres carrés, est utilisée pour résoudre (70) les équations (140a à 140c).

**13.** Procédé selon l'une des revendications 1 à 12, **caractérisé en ce qu'**au moins une largeur de ligne d'au moins un spectre d'excitation (110a à 110d) est corrigée à partir du spectre de réponse (120a à 120d) correspondant.

**14.** Procédé selon l'une des revendications 1 à 13, **caractérisé en ce qu'**au moins un spectre d'excitation (110a à 110d) est modulé périodiquement dans le temps.

**15.** Produit de programme informatique contenant des instructions lisibles par machine qui, lorsqu'elles sont exécutées sur un ordinateur et/ou sur un système intégré, amènent l'ordinateur ou le système intégré à mettre en œuvre un procédé selon l'une des revendications 1 à 14.

Fig. 1

Fig. 2a (Stand der Technik)

Fig. 2b (Stand der Technik)

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 2006192969 A1

- US 8570507 B1

**In der Beschreibung aufgeführte Nicht-Patentliteratur**

- **P. MATOUSEK ; M. TOWRIE ; A. W. PARKER.** Simple Reconstruction Algorithm for Shifted Excitation Raman Difference Spectroscopy. *Applied Spectroscopy,* 2005, vol. 59 (6), 848-851
- **A. C. DE LUCA ; K. DHOLAKIA ; M. MAZILU.** Modulated Raman Spectroscopy for Enhanced Cancer Diagnosis at the Cellular Level. *Sensors,* 2015, vol. 15, 13680-13704
- **S. DOCHOW ; B. BERGNER ; C. KRAFFT ; J. CLEMENT ; M. MAZILU ; B. B. PRAVEEN ; P. C. ASHOK ; R. MARCHINGTON ; K. DHOLAKIA ; J. POPP.** Classification of Raman spectra of single cells with autofluorescence suppression by wavelength modulated excitation. *Analytical Methods,* 2013, vol. 5, 4608-4614

- **A. C. DE LUCA ; M. MAZILU ; A. RICHES ; C. S. HERRINGTON ; K. DHOLAKIA.** Online Fluorescence Suppression in Modulated Raman Spectroscopy. *Analytical Chemistry,* 2010, vol. 82, 738-745
- **OSTICIOLI et al.** Fluorescence and Raman spectra on painting materials: reconstruction of spectra with mathematical methods. *Journal of Raman Spectroscopy,* 2006, vol. 37 (10), ISSN 0377-0486, 974-980
- **OSTICIOLI et al.** Shift-Excitation Raman Difference Spectroscopy-Difference Deconvolution Method for the Luminescence Background Rejection from Raman Spectra of Solid Samples. *Applied Spectroscopy,* 2007, vol. 61 (8), ISSN 0003-7028, 839-844
- **RAMOS et al.** Noise and background removal in Raman spectra of ancient pigments using wavelet transform. *Journal of Raman Spectroscopy,* 2005, vol. 36 (9), ISSN 0377-0486, 848-856